# EUROPÄISCHE PATENTSCHRIFT

(11) **EP 3 436 882 B1**
(45) Veröffentlichungstag und Bekanntmachung des Hinweises auf die Patenterteilung: **28.04.2021**
(21) Anmeldenummer: 17710829.7
(22) Anmeldetag: 14.03.2017
(51) Int. Cl.: G05D 11/13

(54) **VOLUMETRISCHER UND GRAVIMETRISCHER FÜLLSTAND ZUR HERSTELLUNG VON GASGEMISCHEN**
VOLUMETRIC AND GRAVIMETRIC FILL STATE FOR PRODUCING A GAS MIXTURE
NIVEAU VOLUMÉTRIQUE ET GRAVIMÉTRIQUE POUR LA PRODUCTION DE MÉLANGES DE GAZ

(30) Priorität: 31.03.2016 DE 102016003875
(43) Veröffentlichungstag der Anmeldung: 06.02.2019
(73) Patentinhaber: Linde GmbH, 82049 Pullach (DE)
(72) Erfinder: SCHMID, Hans, Juergen, 82194 Gröbenzell (DE)
(74) Vertreter: Gellner, Bernd
(86) Internationale Anmeldenummer: PCT/EP2017/025048
(87) Internationale Veröffentlichungsnummer: WO 2017/167455

(56) Entgegenhaltungen:
- EP-A2- 0 992 733
- US-A1- 2005 092 386
- US-A1- 2006 210 430
- US-A1- 2015 217 245

## Beschreibung

Die Erfindung betrifft ein Verfahren sowie eine Einrichtung zur Herstellung eines Gasgemisches aus einer Mehrzahl an Komponenten.

Zur Herstellung von Gasgemischen wird oftmals das gravimetrische Verfahren oder das manometrische Verfahren verwendet.

Beim gravimetrischen Verfahren werden die einzelnen Komponenten des herzustellenden Gasgemisches nacheinander in den Behälter (z.B. eine Druckgasflasche) gefüllt, wobei während oder nach jeder Dosierung die Masse des Behälters und seines Inhaltes durch Wiegen des Behälters bestimmt wird. Man erhält auf diese Weise die Massenanteile der einzelnen eingefüllten Komponenten, die in Stoffmengenanteile umgerechnet werden können.

Ist die gewünschte Genauigkeit nicht durch eine solche Direktdosierung der Komponenten erreichbar, z.B. bei niedrigen Konzentrationen insbesondere leichterer Komponenten des herzustellenden Gasgemisches, können sogenannte Vorgemische verwendet werden, die die gewünschten Komponenten mit höheren Gehalten enthalten.

Weiterhin wird zur Gasgemischherstellung das sogenannte volumetrische Verfahren verwendet, bei dem ein Volumenstrom der zu dosierenden Komponente in einem bekannten Probenvolumen eingesperrt wird und aus diesem in den Behälter überführt wird.

Schließlich wird auch das sogenannte manometrische Verfahren verwendet, wie es z.B. in der DE 197 04 868 C1 beschrieben ist. Danach wird zur Dosierung die Druckänderung im Behälter nach Befüllung mit der jeweiligen Komponente gemessen.

In der EP 0 992 733 A2 wird weiterhin vorgeschlagen, manometrische, gravimetrische und volumetrische Gasdosierung zur Herstellung von Gasgemischen zu kombinieren. Bei der direkten Herstellung von präzisen Gasgemischen im Bereich von ca. 1 Vol.-ppm bis 1 Vol.-% zumindest einer Komponente des Gasgemisches besteht regelmäßig die Problematik, dass bei den üblichen Gasbehältervolumina im Bereich von z.B. einem Liter bis 50 Liter die Auflösung der Waage (gravimetrisches Verfahren), die Kraftnebenschlüsse der Zuleitung, Auftriebseffekte und andere Störquellen dazu führen, dass Verdünnungsstufen bzw. Vorgemische gefertigt werden müssen, um das herzustellende Gasgemisch in der nötigen Genauigkeit herstellen zu können.

Hiervon ausgehend liegt der vorliegenden Erfindung die Aufgabe zugrunde, ein Verfahren sowie eine Einrichtung zur Herstellung eines Gasgemisches bereitzustellen, das im Hinblick auf die vorgenannte Problematik verbessert ist.

Diese Aufgabe wird durch ein Verfahren mit den Merkmalen des Anspruchs 1 sowie durch eine Einrichtung mit den Merkmalen des Anspruchs 10 gelöst.

Vorteilhafte Ausgestaltungen des erfindungsgemäßen Verfahrens bzw. der erfindungsgemäßen Einrichtung sind in den entsprechenden Unteransprüchen angegeben oder werden nachfolgend beschrieben.

Gemäß Anspruch 1 ist ein Verfahren zur Herstellung eines Gasgemisches in einem Gasbehälter, insbesondere in Form einer Druckgasflasche, insbesondere mit einem Volumen im Bereich von einem Liter bis 50 Liter, vorgesehen, wobei das fertige Gasgemisch eine Mehrzahl an Komponenten aufweist, wobei zumindest eine erste Komponente volumetrisch dosiert wird, wobei jene erste Komponente aus einem Vorratsbehälter der ersten Komponente in zumindest einem Probenvolumen einer Mehrzahl an Probenvolumina eingesperrt wird und aus dem mindestens einen Probenvolumen in den Gasbehälter geleitet wird, und wobei zumindest eine zweite Komponente gravimetrisch dosiert wird, wobei jene mindestens eine zweite Komponente aus einem Vorratsbehälter der mindestens einen zweiten Komponente in den Gasbehälter geleitet wird und der Gasbehälter zur Bestimmung des Anteils der mindestens einen zweiten Komponente mittels einer Waage gewogen wird, wobei die mindestens eine zweite Komponente über einen zweiten Strömungspfad sowie einen im zweiten Strömungspfad angeordneten zweiten Druckregler in den Gasbehälter geleitet wird, wobei der zweite Druckregler bevorzugt mittels eines Ausgangssignals der Waage gesteuert wird.

Bei den Komponenten kann es sich prinzipiell um alle Gase handeln, die Bestandteile des fertig hergestellten Gasgemisches sein sollen, insbesondere um reine Gase wie z.B. Stickstoff, Sauerstoff, CO₂, Argon, Helium oder andere Edelgase. Des Weiteren kann es sich bei einer Komponente auch um ein Gasgemisch handeln, das hier als Vorgemisch bezeichnet wird und selber mehrere Komponenten umfassen kann.

Gemäß einer Ausführungsform des erfindungsgemäßen Verfahrens ist vorgesehen, dass die zweite Komponente eine Restgaskomponente darstellt, die den größten Anteil im hergestellten Gasgemisch bildet.

Weiterhin ist gemäß einer Ausführungsform des erfindungsgemäßen Verfahrens vorgesehen, dass die mindestens eine erste Komponente einen Anteil des hergestellten Gasgemisches bildet, der kleiner ist als 5 Vol.-%, bevorzugt kleiner als 1 Vol.-%, bevorzugt kleiner als 0,1 Vol.-%, bevorzugt kleiner als 0,01 Vol.-%, bevorzugt kleiner als 0,001 Vol.-%, bevorzugt kleiner als 0,0001 Vol.-%, bevorzugt kleiner als 0,00001 Vol.-%, bevorzugt kleiner als 0,000001 Vol.-%.

Weiterhin ist gemäß einer Ausführungsform des erfindungsgemäßen Verfahrens vorgesehen, dass das volumetrische Dosieren der mindestens einen ersten Komponente und/oder das gravimetrische Dosieren der mindesten einen zweiten Komponente automatisch erfolgt.

Weiterhin ist gemäß einer Ausführungsform des erfindungsgemäßen Verfahrens vorgesehen, dass die mindestens eine erste Komponente über einen ersten Strömungspfad sowie einen im ersten Strömungspfad angeordneten Druckregler in das mindestens eine Probenvolumen geleitet wird, so dass die mindestens eine erste Komponente in dem mindestens einen Probenvolumen einen vordefinierbaren Druck aufweist.

Weiterhin ist gemäß einer Ausführungsform des erfindungsgemäßen Verfahrens vorgesehen, dass die mindestens eine erste Komponente über ein Mehrportventil, über das der Strömungspfad in Strömungsverbindung mit dem mindestens einen Probenvolumen bringbar ist, in das mindestens eine Probenvolumen geleitet wird.

Weiterhin ist gemäß einer Ausführungsform des erfindungsgemäßen Verfahrens vorgesehen, dass das mindestens eine Probenvolumen aus einer Mehrzahl an Probenvolumina ausgewählt wird (z.B. vier Probenvolumina), wobei insbesondere eines der Probenvolumina das größte Volumen aufweist, und wobei die weiteren Probenvolumina jeweils ein Volumen aufweisen, das einem konstanten Bruchteil des jeweils nächstgrößeren Probenvolumens entspricht.

Weiterhin ist gemäß einer Ausführungsform des erfindungsgemäßen Verfahrens vorgesehen, dass die mindestens eine zweite Komponente über einen zweiten Strömungspfad sowie einen im zweiten Strömungspfad angeordneten zweiten Druckregler in den Gasbehälter geleitet wird, wobei der zweite Druckregler insbesondere dazu konfiguriert ist, die Füllgeschwindigkeit zu regeln, D.h., die Menge des zu dosierenden Gases bzw. der zweiten Komponente, die pro Zeiteinheit in den Gasbehälter strömt.

Insbesondere wird der zweite Druckregler mittels des besagten Ausgangssignals so gesteuert, dass der Druck der in den Gasbehälter einzuleitenden Komponente beim Erreichen der gewünschten Menge jener Komponente im Gasbehälter herunter geregelt wird. Auf diese Weise wird beim Erreichen der Zielmenge der Volumenstrom in den Gasbehälter definiert gedrosselt und der Gasbehälter kann beim Erreichen der Zielmenge präzise mittels eines im zweiten Strömungspfad vorgesehenen Ventils abgesperrt werden.

Weiterhin ist gemäß einer Ausführungsform des erfindungsgemäßen Verfahrens vorgesehen, dass die mindestens eine erste Komponente mittels eines über den ersten Strömungspfad geführten Teils der mindestens einen in den Gasbehälter einzuleitenden zweiten Komponente (insbesondere Restgas) in den Gasbehälter gedrückt wird. Hierdurch ist mit Vorteil eine vollständige Überführung der zu dosierenden Volumina durch ein Nachschieben mittels des Restgases bzw. der mindestens einen zweiten Komponente über die Probenvolumina in den Gasbehälter möglich.

Weiterhin wird die erfindungsgemäße Aufgabe durch eine Einrichtung zum Herstellen eines Gasgemisches in einem Gasbehälter mit den Merkmalen des Anspruchs 9 gelöst. Danach weist die Einrichtung zumindest auf: eine Mehrzahl an Vorratsbehältern zum Speichern von Komponenten des herzustellenden Gasgemisches, einen Gasbehälter zum Aufnehmen des herzustellenden Gasgemisches, eine Waage zur gravimetrischen Dosierung von Komponenten des Gasgemisches, die dazu konfiguriert ist, den Gasbehälter zu wiegen, einen ersten Strömungspfad, über den die Vorratsbehälter zur gravimetrischen Dosierung von Komponenten des herzustellenden Gasgemisches mit dem Gasbehälter in Strömungsverbindung bringbar sind, eine Mehrzahl an Probenvolumina zur volumetrischen Dosierung von Komponenten des herzustellenden Gasgemisches, die jeweils mit dem Gasbehälter in Strömungsverbindung bringbar sind, und einen zweiten Strömungspfad, über den die Vorratsbehälter mit der Mehrzahl an Probenvolumina in Strömungsverbindung bringbar sind, wobei im zweiten Strömungspfad ein zweiter Druckregler angeordnet ist, wobei der zweite Druckregler dazu konfiguriert ist, mittels eines Ausgangssignals der Waage gesteuert zu werden.

Gemäß einer Ausführungsform der erfindungsgemäßen Einrichtung ist vorgesehen, dass der ersten Strömungspfad über einen ersten Druckregler geführt wird, so dass eine volumetrisch zu dosierende Komponenten in dem jeweiligen Probenvolumen mit einem vordefinierbaren Druck einsperrbar ist.

Weiterhin ist gemäß einer Ausführungsform der erfindungsgemäßen Einrichtung vorgesehen, dass die Probenvolumina jeweils parallel zum ersten Strömungspfad angeordnet sind, wobei jedes Probenvolumen über ein Mehrportventil mit dem ersten Strömungspfad in Strömungsverbindung bringbar ist, wobei jedes Mehrportventil einen ersten Zustand aufweist, in dem das jeweilige Probenvolumen mit dem Strömungspfad in Strömungsverbindung steht, insbesondere mit einem Einlass sowie einem Auslass des jeweiligen Probenvolumens, und einen zweiten Zustand, in dem das jeweilige Probenvolumen abgesperrt und von dem Strömungspfad getrennt ist (Einlass und Auslass des jeweiligen Probenvolumens sind verschlossen).

Weiterhin ist gemäß einer Ausführungsform der Erfindung vorgesehen, dass sich die Probenvolumina in ihrem Volumen voneinander unterscheiden, wobei insbesondere eines der Probenvolumina das größte Volumen aufweist, und wobei die weiteren Probenvolumina jeweils ein Volumen aufweisen, das einem konstanten Bruchteil des jeweils nächstgrößeren Probenvolumens entspricht.

Erfindungsgemäß ist im zweiten Strömungspfad ein zweiter Druckregler angeordnet, wobei der zweite Druckregler dazu konfiguriert ist, mittels eines Ausgangssignals der Waage gesteuert zu werden (siehe oben).

Im Ergebnis ermöglicht die vorliegende Erfindung eine automatisierbare Füllung von Gasgemischen, wobei auf aufgrund der erfindungsgemäßen Kombination einer volumetrischen mit einer gravimetrischen Dosierung der Gaskomponenten die üblicherweise verwendeten Vorgemische verzichtbar sind, was die Herstellung des Gasgemisches insgesamt erleichtert, da nunmehr eine direkte Mischung aus den Komponenten vorgenommen werden kann. Aufgrund der Möglichkeit einer automatisierten Erstellung von Gasgemischen können mehrere derartige Einrichtungen bzw. Füllanlagen gleichzeitig von einer Person bedient werden. Weiterhin erlaubt die vorliegende Erfindung eine höhere Reproduzierbarkeit bei der Herstellung von Gasgemischen sowie eine Zertifizierung des hergestellten Gasgemisches direkt durch die Einrichtung.

Weitere Merkmale und Vorteile des erfindungsgemäßen Verfahrens sowie der erfindungsgemäßen Einrichtung sollen anhand eines Ausführungsbeispiels mit Bezug auf die Figuren erläutert werden. Es zeigen:
- Fig. 1: einen Aufbau einer erfindungsgemäßen Einrichtung zur Durchführung des erfindungsgemäßen Verfahrens; und
- Fig. 2: eine schematische Darstellung eines Mehrportventils, das bevorzugt bei der erfindungsgemäßen Einrichtung bzw. dem erfindungsgemäßen Verfahren verwendet wird.

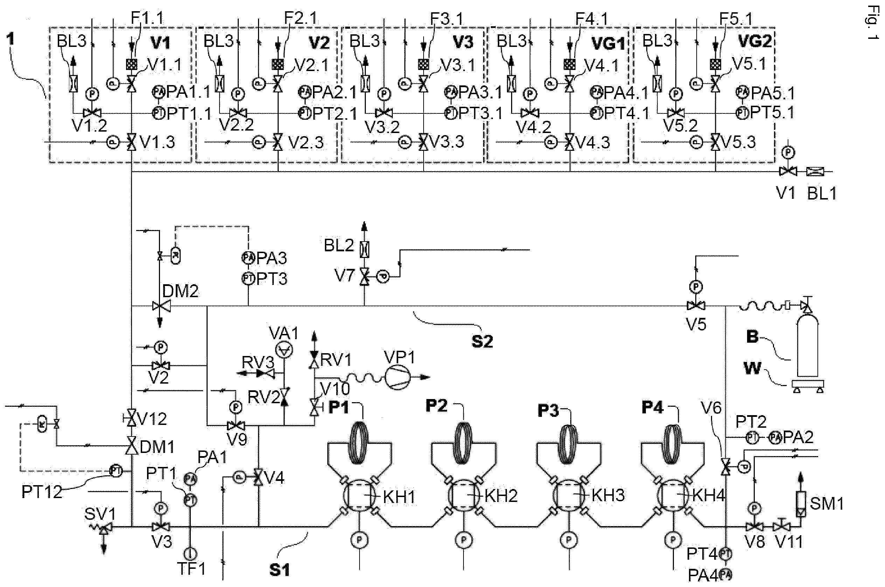

Figur 1 zeigt eine Einrichtung 1 zum Herstellen eines Gasgemisches in einem Gasbehälter B, der zur Aufnahme des herzustellenden Gasgemisches dient. Bei dem Gasbehälter B handelt es sich bevorzugt um eine Druckgasflasche.

Die Einrichtung weist eine Mehrzahl an Vorratsbehältern V1, V2, V3, VG1, VG2 oder Leitungen auf, die zum Speichern bzw. Bevorraten diverser Komponenten dienen, aus denen das herzustellende Gasgemisch gemischt werden soll. So kann beispielsweise in dem Vorratsbehälter V1 Argon, in dem Vorratsbehälter V2 Helium und in dem Vorratsbehälter V3 Stickstoff gespeichert sein. Weiterhin können die Vorratsbehälter VG1 und VG2 z.B. Vorgemische enthalten, die zur Herstellung eines Gasgemisches verwendet werden sollen.

Die einzelnen Vorratsbehälter V1, V2, V3, VG1, VG2 sind zur volumetrischen Dosierung der einzelnen Komponenten über einen ersten Strömungspfad S1, der einen ersten Druckregler DM1 aufweist, mit einer Reihe an Probenvolumina P1, P2, P3, P4 in Strömungsverbindung bringbar, so dass die einzelnen Probenvolumina P1, P2, P3, P4 ggf. nacheinander bei einem vordefinierbaren Druck, der insbesondere im Bereich von 0 bis 20 bar liegt, mit der jeweiligen Komponente des herzustellenden Gasgemisches füllbar sind.

Im Einzelnen ist jeder der Vorratsbehälter V1, V2, V3, VG1, VG2 über einen Filter F1.1, F2.1, F3.1, F4.1, F5.1 sowie zwei nacheinander angeordnete Ventile V1.1, V1.3; V2.1, V2.3; V3.1, V3.3; V4.1, V4.3; V5.1, V5.3 über den ersten Druckregler DM1 mit dem ersten Strömungspfad S1 und über einen zweiten Druckregler DM2, der weiter unten beschrieben wird, mit einem zweiten Strömungspfad S2 strömungsverbindbar. Zwischen den beiden stromab des jeweiligen Vorratsbehälters V1, V2, V3, VG1, VG2 angeordneten Ventilen V1.1, V1.3; V2.1, V2.3; V3.1, V3.3; V4.1, V4.3; V5.1, V5.3 ist jeweils ein Drucksensor PT1.1, PT2.1, PT3.1, PT4.1, PT5.1 angeordnet sowie ein Abzweig zu je einem weiteren Ventil V1.2, V2.2, V3.2, V4.2, V5.2 und einer stromab angeordneten Blende BL3. Stromab der Ventile V1.3, V2.3, V3.3, V4.3, V5.3 ist ein Absperrventil V12 angeordnet, welches wiederum stromauf des ersten Druckreglers DM1 angeordnet ist. Die Blenden BL3 dienen zur Reduzierung eines Spülflusses über die Spülventile V1.2, V2.2, V3.2, V4.2, V5.2 im Falle eines Medienwechsels ("double block and bleed"). Zudem kann bei geschlossenen Ventilen V1.1, V2.1, V3.1, V4.1, V5.1 die Dichtigkeit dieser Ventile über einen Druckanstieg des jeweiligen Drucksensors PT1.1, PT2.1, PT3.1, PT4.1, PT5.1 überwacht werden.
Die Probenvolumina P1, P2, P3, P4 im ersten Strömungspfad S1 können z.B. in Schleifenform ausgebildet sein und unterscheiden sich in ihrem Volumen, wobei die Volumina in Gasstromrichtung, d.h., zum Gasbehälter B hin, abnehmen und jeweils nur einen konstanten Bruchteil des Vorgängervolumens betragen, z.B. vorliegend ein Bruchteil in Höhe von 1/20. So kann z.B. das erste Probenvolumen P1 ein Volumen von 2000ml aufweisen, das zweite Probenvolumen P2 ein Volumen von 100ml, das dritte Probenvolumen ein Volumen von 5ml und das vierte Probenvolumen P4 ein Volumen von 0,25ml.

Die einzelnen Probenvolumen P1, P2, P3, P4 sind jeweils über ein Mehrportventil KH1, KH2, KH3, KH4 stromab des ersten Druckreglers DM1 mit dem ersten Strömungspfad S1 verbunden, wobei jedes Mehrportventil KH1, KH2, KH3, KH4 einen ersten Zustand aufweist, in dem das jeweilige Probenvolumen P1, P2, P3, P4 über je einen Einlass sowie insbesondere über je einen Auslass mit dem ersten Strömungspfad S1 in Strömungsverbindung steht, sowie einen zweiten Zustand, in dem das jeweilige Probenvolumen P1, P2, P3, P4 komplett abgesperrt und von dem ersten Strömungspfad (S1) getrennt ist. Entsprechend können die Probenvolumina P1, P2, P3 und P4 separat mit einem variablen Druck mit Gaskomponenten beschickt werden. Dies erlaubt ein präzises volumetrisches Dosieren der jeweiligen Komponente. Stromab des ersten Druckreglers DM1 sowie stromauf der Mehrportventile KH1, KH2, KH3, KH4 und stromab der Mehrportventile KH1, KH2, KH3 und KH4 ist je ein Ventil V3 bzw. V6 vorgesehen, mittels denen ein Abschnitt des ersten Strömungspfades S1 absperrbar ist, in dem die Mehrportventile KH1, KH2, KH3 und KH4 für die Probenvolumina P1, P2, P3, P4 angeordnet sind, wobei die volumetrisch dosierten Komponenten aus den Probenvolumina P1 bis P4 über das Ventil V6 in den Gasbehälter B geleitet werden können. Hierbei ist das Ventil V5, über das der zweite Strömungspfad S2 (siehe unten) zum Gasbehälter B geführt ist, geschlossen.

Bei dem Ventil SV1, das stromab des ersten Druckreglers DM1 sowie stromauf des Ventils V3 vorgesehen ist, handelt es sich um ein Sicherheitsventil. Für den Fall, dass der Strömungspfad S1 gemäß einem Bespiel der Erfindung auf 30 bar ausgelegt ist, würde SV1 bei einem Druck oberhalb von 30 bar öffnen (sofern DM1 durchlässt).

Weiterhin sind stromab des Ventils V3 sowie stromauf des Mehrportventils KH1 zum Messen des Drucks und der Temperatur der zu dosierenden Komponenten in den Probenvolumina P1, P2, P3, P4 ein Druck- sowie ein Temperatursensor PT1 bzw. TF1 vorgesehen. Ein weiterer Drucksensor PT4 zum Messen des Drucks der volumetrisch zu dosierenden Komponenten ist stromauf des Ventils V6 sowie stromab des Mehrportventils KH4 vorgesehen. Weiterhin ist zum Messen des Drucks im Gasbehälter B stromab des Ventils V6 ein Drucksensor PT2 vorgesehen.

Zwischen dem Drucksensor PT4 sowie dem Ventil V6 ist des Weiteren ein Abzweig zu einem Ventil V8 vorgesehen, über das der erste Strömungspfad S1 gespült werden kann. Stromab von V8 ist ein Nadelventil oder ein Restriktor V11 vorgesehen, das bzw. der zum Begrenzen des Spülflusses dient. Ferner ist stromab der beiden Ventile V8 und V11 ein Rotameter SM1 angeordnet.

Schließlich kann zum Evakuieren der Probenvolumina P1, P2, P3, P4 eine Pumpe VP1 über die Ventile V10 und V4 in Strömungsverbindung mit den Probenvolumina gebracht werden. Die Pumpe VP1 kann weiterhin über das Ventil V9 mit dem zweiten Strömungspfad S2 in Strömungsverbindung gebracht werden.

Der Gasbehälter B ist des Weiteren auf eine Waage W angeordnet, so dass in den Vorratsbehältern V1, V2, V3, VG1 und VG2 befindliche Komponenten gravimetrisch in den Gasbehälter B dosierbar sind. Hierbei wird der Anteil der Komponente am fertigen Gasgemisch durch Wiegen des Gasbehälters B bestimmt. Die jeweils gravimetrisch zu dosierende Komponente wird aus den Vorratsbehältern V1, V2, V3, VG1 bzw. VG2 über die jeweiligen Ventile V1.1, V1.3; V2.1, V2.3, V3.1, V3.3; V4.1, V4.3; V5.1, V5.3 über den zweiten Druckregler DM2 des zweiten Strömungspfades S2 sowie über das Ventil V5 in den Gasbehälter B geführt.

Zum Messen des Drucks der jeweiligen Komponente im zweiten Strömungspfad S2 ist stromab des Druckreglers DM2 sowie stromauf des Ventils V5 ein Drucksensor PT3 vorgesehen. Die Waage W stellt vorzugsweise ein Ausgangssignal bereit, das zum Steuern des zweiten Druckreglers DM2 verwendet wird. Hierdurch kann die gravimetrische Dosierung durch die Rückantwort der Waage W gesteuert werden. Dies ermöglicht z.B. eine Reduktion der Füllgeschwindigkeit beim Erreichen der jeweiligen Zielmenge im Gasbehälter B.

Des Weiteren ist insbesondere zum Evakuieren der Hochdruckseite bzw. des zweiten Strömungspfades S2 bis zu den Ventilen V1.3, V2.3, ... ein Ventil V2 vorgesehen, das parallel zum zweiten Druckregler DM2 angeordnet ist, so dass nicht über DM2 evakuiert werden muss.

Weiterhin zweigt vom zweiten Strömungsweg S2 stromab des zweiten Druckreglers ein Ventil V7 ab, wobei stromab des Ventils eine Blende BL2 zum Reduzieren eines Spülflusses über das Ventil V7 angeordnet ist. Über V7 kann Restgas vor dem Überführen in den Druckbehälter B gespült werden. Nach der Füllung ist die Füllleitung zum Anschlussventil des Druckbehälters B unter Druck. Zum Abschließen des Gasbehälters B kann der Druck über V7 abgebaut werden, um die Verbindung öffnen zu können.

Vorzugsweise werden beim erfindungsgemäßen Verfahren bzw. bei der erfindungsgemäßen Vorrichtung geringe Gehalte (z.B. im Bereich von 1 Vol.-ppm bis 1 Vol.-%) volumetrisch über die Probenvolumina P1, P2, P3 und P4 dosiert, wohingegen größere Gehalte bevorzugt gravimetrisch dosiert werden. Dies gilt insbesondere für das Restgas, also diejenige Komponente, die den größten Gehalt im Gasgemisch aufweist. Insbesondere kann die Restgaskomponente dazu verwendet werden, eine zuvor volumetrisch dosierte Komponente aus einem oder mehreren Probenvolumina P1, P2, P3, P4 herauszudrücken, und zwar insbesondere dann, wenn der Druck im ersten Strömungspfad S1 bzw. in den entsprechenden Probenvolumina P1, P2, P3, P4 nicht ausreicht, um die dort gespeicherte Komponente in den Gasbehälter B zu überführen. Hierzu wird ein Teilstrom der Restgaskomponente über den ersten Druckregler DM1 in den ersten Strömungspfad S1 geleitet, wobei die Mehrportventile KH1, KH2, KH3, KH4 der betreffenden Probenvolumina so gestellt sind, dass der besage Restgasteil die zuvor volumetrisch dosierte Komponente in den Gasbehälter B mitnimmt.

Vorzugsweise sind die vorstehend beschriebenen Ventile, insbesondere die Ventile KH1, KH2, KH3 sowie KH4 als Multiportventile ausgebildet. Ferner können die einzelnen Ventile pneumatisch gestellt werden.

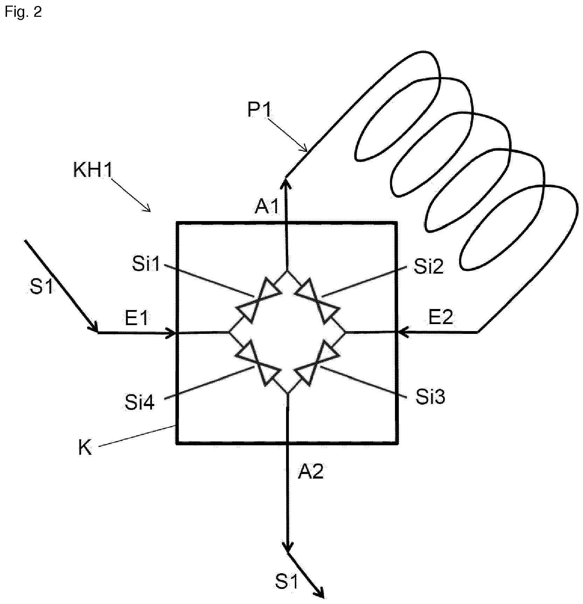

Derartige Multiportventile werden bevorzugt verwendet, da sie eine vorteilhaft kleine Bauform und ein geringes Todvolumen aufweisen sowie besser bzw. schneller zu spülen sind. Ein derartiges Multiportventil mit vier Ports, hier in Form von zwei Eingängen E1, E2 und zwei Ausgängen A1, A2, die an einem Ventilkörper K ausgebildet sind, wird exemplarisch in der Figur 2 anhand des Ventils KH1 aus Figur 1 gezeigt. Das Multiportventil KH1 weist bevorzugt zwei Membranen mit je zwei Sitzen Si1, Si2 bzw. Si3, Si4 auf, die in der Figur 2 schematisch durch je ein Ventil dargestellt sind. Je nach Stellung der Membranen kann in bekannter Weise z.B. Gas aus dem ersten Strömungspfad S1 über den Eingang E1 sowie den Ausgang A1 in das Probenvolumen P1 geleitet werden, dort gespeichert werden oder über den zweiten Eingang E2 sowie den zweiten Ausgang A2 wieder aus dem Probenvolumen P1 abgezogen werden. Ebenfalls besteht die Möglichkeit, Gas über den Eingang E1 sowie den Ausgang A2 am Probenvolumen P1 vorbeizuführen.

## Patentansprüche

1. Verfahren zur Herstellung eines Gasgemisches in einem Gasbehälter (B), das eine Mehrzahl an Komponenten aufweist, wobei zumindest eine erste Komponente volumetrisch dosiert wird, wobei jene erste Komponente aus einem Vorratsbehälter (V1, V2, V3, VG1, VG2) der ersten Komponente in zumindest einem Probenvolumen (P1, P2, P3, P4) einer Mehrzahl an Probenvolumina eingesperrt wird und aus dem mindestens einen Probenvolumen (P1, P2, P3, P4) in den Gasbehälter (B) geleitet wird, und wobei zumindest eine zweite Komponente gravimetrisch dosiert wird, wobei jene mindestens eine zweite Komponente aus einem Vorratsbehälter (V1, V2, V3, VG1, VG2) der mindestens einen zweiten Komponente in den Gasbehälter (B) geleitet wird und der Gasbehälter (B) zur Bestimmung des Anteils der mindestens einen zweiten Komponente mittels einer Waage (W) gewogen wird, **dadurch gekennzeichnet, dass** die mindestens eine zweite Komponente über einen zweiten Strömungspfad (S2) sowie einen im zweiten Strömungspfad (S2) angeordneten zweiten Druckregler (DM2) in den Gasbehälter (B) geleitet wird, wobei der zweite Druckregler (DM2) mittels eines Ausgangssignals der Waage (W) gesteuert wird.

2. Verfahren nach Anspruch 1, **dadurch gekennzeichnet, dass** die zweite Komponente eine Restgaskomponente darstellt, die den größten Anteil im hergestellten Gasgemisch bildet.

3. Verfahren nach Anspruch 1 oder 2, **dadurch gekennzeichnet, dass** die mindestens eine erste Komponente einen Anteil des hergestellten Gasgemisches bildet, der kleiner ist als 5 Vol.-%, bevorzugt kleiner als 1 Vol.-%, bevorzugt kleiner als 0,1 Vol.-%, bevorzugt kleiner als 0,01 Vol.-%, bevorzugt kleiner als 0,001 Vol.-%, bevorzugt kleiner als 0,0001 Vol.-%, bevorzugt kleiner als 0,00001 Vol.-%, bevorzugt kleiner als 0,000001 Vol.-%.

4. Verfahren nach einem der vorhergehenden Ansprüche, **dadurch gekennzeichnet, dass** das volumetrische Dosieren der mindestens einen ersten Komponente und/oder das gravimetrische Dosieren der mindestens einen zweiten Komponente automatisch erfolgt.

5. Verfahren nach einem der vorhergehenden Ansprüche, **dadurch gekennzeichnet, dass** die mindestens eine erste Komponente über einen ersten Strömungspfad (S1) sowie einen im ersten Strömungspfad (S1) angeordneten Druckregler (DM1) in das mindestens eine Probenvolumen (P1, P2, P3, P4) geleitet wird, so dass die mindestens eine erste Komponente in dem mindestens einen Probenvolumen (P1, P2, P3, P4) einen vordefinierbaren Druck aufweist.

6. Verfahren nach Anspruch 5, **dadurch gekennzeichnet, dass** die mindestens eine erste Komponente über ein Mehrportventil (KH1, KH2, KH3, KH4), über das der erste Strömungspfad (S1) in Strömungsverbindung mit dem mindestens einen Probenvolumen (P1, P2, P3, P4) bringbar ist, in das mindestens eine Probenvolumen (P1, P2, P3, P4) eingeleitet wird.

7. Verfahren nach einem der vorhergehenden Ansprüche, **dadurch gekennzeichnet, dass** das mindestens eine Probenvolumen aus einer Mehrzahl an Probenvolumina (P1, P2, P3, P4) ausgewählt wird, wobei insbesondere eines der Probenvolumina (P1) das größte Volumen aufweist, und wobei die weiteren Probenvolumina (P2, P3, P4) jeweils ein Volumen aufweisen, das einem konstanten Bruchteil des jeweils nächstgrößeren Probenvolumens entspricht.

8. Verfahren nach einem der vorhergehenden Ansprüche, **dadurch gekennzeichnet, dass** die mindestens eine erste Komponente mittels eines über den ersten Strömungspfad (S1) geführten Teils der mindestens einen in den Gasbehälter (B) einzuleitenden zweiten Komponente in den Gasbehälter (B) gedrückt wird.

9. Einrichtung (1) zum Herstellen eines Gasgemisches in einem Gasbehälter (B), mit:
- einer Mehrzahl an Vorratsbehältern (V1, V2, V3, VG1, VG2) zum Speichern von Komponenten des herzustellenden Gasgemisches,
- einem Gasbehälter (B) zum Aufnehmen des herzustellenden Gasgemisches,
- einer Waage (W) zur gravimetrischen Dosierung von Komponenten des Gasgemisches, die dazu konfiguriert ist, den Gasbehälter (B) zu wiegen,
- einem ersten Strömungspfad (S1), über den die Vorratsbehälter (V1, V2, V3, VG1, VG2) zur gravimetrischen Dosierung von Komponenten des herzustellenden Gasgemisches mit dem Gasbehälter (B) in Strömungsverbindung bringbar sind,
- einer Mehrzahl an Probenvolumina (P1, P2, P3, P4) zur volumetrischen Dosierung von Komponenten des herzustellenden Gasgemisches, die jeweils mit dem Gasbehälter (B) in Strömungsverbindung bringbar sind, und
- einem zweiten Strömungspfad (S2), über den die Vorratsbehälter (V1, V2, V3, VG1, VG2) mit der Mehrzahl an Probenvolumina (P1, P2, P3, P4) in Strömungsverbindung bringbar sind, **dadurch gekennzeichnet, dass** im zweiten Strömungspfad (S2) ein zweiter Druckregler (DM2) angeordnet ist, wobei der zweite Druckregler (DM2) dazu konfiguriert ist, mittels eines Ausgangssignals der Waage (W) gesteuert zu werden.

10. Einrichtung nach Anspruch 9, **dadurch gekennzeichnet, dass** im ersten Strömungspfad (S1) ein erster Druckregler (DM1) vorgesehen ist, so dass eine volumetrisch zu dosierende Komponenten in dem jeweiligen Probenvolumen (P1, P2, P3, P4) mit einem vordefinierbaren Druck einsperrbar ist.

11. Einrichtung nach Anspruch 9 oder 10, **dadurch gekennzeichnet, dass** die Probenvolumina (P1, P2, P3, P4) jeweils parallel zum ersten Strömungspfad angeordnet sind, wobei jedes Probenvolumen (P1, P2, P3, P4) über ein Mehrportventil (KH1, KH2, KH3, KH4) mit dem ersten Strömungspfad (S1) in Strömungsverbindung bringbar ist, wobei jedes Mehrportventil (KH1, KH2, KH3, KH4) einen ersten Zustand aufweist, in dem das jeweilige Probenvolumen (P1, P2, P3, P4) mit dem ersten Strömungspfad (S2) in Strömungsverbindung seht, sowie einen zweiten Zustand, in dem das jeweilige Probenvolumen (P1, P2, P3, P4) abgesperrt und von dem ersten Strömungspfad (S1) getrennt ist.

12. Einrichtung nach einem der Ansprüche 9 bis 11, **dadurch gekennzeichnet, dass** sich die Probenvolumina (P1, P2, P3, P4) in ihrem Volumen unterscheiden, wobei insbesondere eines der Probenvolumina (P1) das größte Volumen aufweist, und wobei die weiteren Probenvolumina (P2, P3, P4) jeweils ein Volumen aufweisen, das einem konstanten Bruchteil des jeweils nächstgrößeren Probenvolumens entspricht.

## Claims

1. Method for producing a gas mixture in a gas container (B), which has a plurality of components, wherein at least one first component is metered volumetrically, wherein each first component from a storage container (V1, V2, V3, VG1, VG2) of the first component is confined in at least one sample volume (P1, P2, P3, P4) of a plurality of sample volumes and is passed from the at least one sample volume (P1, P2, P3, P4) into the gas container (B), and wherein at least one second component is gravimetrically metered, wherein the at least one second component is guided from a storage container (V1, V2, V3, VG1, VG2) of the at least one second component into the gas container (B), and the gas container (B) is weighed by means of scales (W) to determine the proportion of the at least one second component, **characterized in that** the at least one second component is guided into the gas container (B) via a second flow path (S2) and a second pressure regulator (DM2) arranged in the second flow path (S2), wherein the second pressure regulator (DM2) is controlled by means of an output signal of the scales (W).

2. Method according to Claim 1, **characterized in that** the second component is a residual gas component, which constitutes the largest proportion in the produced gas mixture.

3. Method according to Claims 1 or 2, **characterized in that** the at least one first component constitutes a proportion of the produced gas mixture that is smaller than 5% by volume, preferably smaller than 1% by volume, preferably smaller than 0.1% by volume, preferably smaller than 0.01% by volume, preferably smaller than 0.001% by volume, preferably smaller than 0.0001% by volume, preferably smaller than 0.00001% by volume, preferably smaller than 0.000001% by volume.

4. Method according to any one of the preceding claims, **characterized in that** the volumetric metering of the at least one first component and/or the gravimetric metering of the at least one second component takes place automatically.

5. Method according to any one of the preceding claims, **characterized in that** the at least one first component is guided into the at least one sample volume (P1, P2, P3, P4) via a first flow path (S1) and a pressure regulator (DM1) arranged in the first flow path (S1), such that the at least one first component has a predefinable pressure in the at least one sample volume (P1, P2, P3, P4).

6. Method according to Claim 5, **characterized in that** the at least one first component is introduced into the at least one sample volume (P1, P2, P3, P4) via a multiport valve (KH1, KH2, KH3, KH4), via which the first flow path (S1) can be brought into flow connection with the at least one sample volume (P1, P2, P3, P4).

7. Method according to any one of the preceding claims, **characterized in that** the at least one sample volume is selected from a plurality of sample volumes (P1, P2, P3, P4), wherein in particular one of the sample volumes (P1) has the largest volume, and wherein the further sample volumes (P2, P3, P4) each have a volume that corresponds to a constant fraction of the respective next largest sample volume.

8. Method according to any one of the preceding claims, **characterized in that** the at least one first component is pressed into the gas container (B) by means of a part of the at least one second component to be introduced into the gas container (B), which part is guided via the first flow path (S1).

9. Device (1) for producing a gas mixture in a gas container (B), comprising:
- a plurality of storage containers (V1, V2, V3, VG1, VG2) for storing components of the gas mixture to be produced,
- a gas container (B) for receiving the gas mixture to be produced,
- scales (W) for the gravimetric metering of components of the gas mixture, which are configured to weigh the gas container (B),
- a first flow path (S1) via which the storage containers (V1, V2, V3, VG1, VG2) can be brought into flow connection with the gas container (B) for the gravimetric metering of components of the gas mixture to be produced,
- a plurality of sample volumes (P1, P2, P3, P4) for the volumetric metering of components of the gas mixture to be produced, each of which can be brought into flow connection with the gas container (B), and
- a second flow path (S2) via which the storage containers (V1, V2, V3, VG1, VG2) can be brought into flow connection with the plurality of sample volumes (P1, P2, P3, P4), **characterized in that** a second pressure regulator (DM2) is arranged in the second flow path (S2), wherein the second pressure regulator (DM2) is configured to be controlled by means of an output signal of the scales (W).

10. Device according to Claim 9, **characterized in that** a first pressure regulator (DM1) is provided in the first flow path (S1), such that a component to be volumetrically metered can be confined in the respective sample volume (P1, P2, P3, P4) at a predefinable pressure.

11. Device according to Claims 9 or 10, **characterized in that** the sample volumes (P1, P2, P3, P4) are each arranged parallel to the first flow path, wherein each sample volume (P1, P2, P3, P4) can be brought into flow connection with the first flow path (S1) via a multiport valve (KH1, KH2, KH3, KH4), wherein each multiport valve (KH1, KH2, KH3, KH4) has a first state, in which the respective sample volume (P1, P2, P3, P4) is in flow connection with the first flow path (S2), and a second state, in which the respective sample volume (P1, P2, P3, P4) is shut off and separated from the first flow path (S1).

12. Device according to any one of Claims 9 to 11, **characterized in that** the sample volumes (P1, P2, P3, P4) differ in volume, wherein in particular one of the sample volumes (P1) has the largest volume, and wherein the further sample volumes (P2, P3, P4) each has a volume corresponding to a constant fraction of the respective next largest sample volume.

## Revendications

1. Procédé pour la production d'un mélange de gaz dans un récipient à gaz (B), lequel mélange présente une multitude de composants, au moins un premier composant étant dosé par volumétrie, ledit premier composant provenant d'un réservoir (V1, V2, V3, VG1, VG2) du premier composant étant enfermé dans au moins un volume d'échantillon (P1, P2, P3, P4) d'une multitude de volumes d'échantillon et guidé à partir dudit au moins un volume d'échantillon (P1, P2, P3, P4) dans le récipient à gaz (B) et au moins un deuxième composant étant dosé par gravimétrie, ledit au moins un deuxième composant étant guidé à partir d'un réservoir (V1, V2, V3, VG1, VG2) dudit au moins un deuxième composant dans le récipient à gaz (B) et le récipient à gaz (B) étant pesé à l'aide d'une balance (W) pour déterminer la proportion dudit au moins un deuxième composant, **caractérisé en ce que** ledit au moins un deuxième composant est guidé dans le récipient à gaz (B) par le biais d'une deuxième voie d'écoulement (S2) ainsi que par le biais d'un deuxième régulateur de pression (DM2) agencé dans la deuxième voie d'écoulement (S2), le deuxième régulateur de pression (DM2) étant commandé au moyen d'un signal de sortie de la balance (W).

2. Procédé selon la revendication 1, **caractérisé en ce que** le deuxième composant représente un composant gazeux résiduel, qui forme la plus grande proportion dans le mélange de gaz produit.

3. Procédé selon la revendication 1 ou 2, **caractérisé en ce que** ledit au moins un premier composant forme une proportion du mélange de gaz produit qui est inférieure à 5 % en volume, de préférence inférieure à 1 % en volume, de préférence inférieure à 0,1 % en volume, de préférence inférieure à 0,01 % en volume, de préférence inférieure à 0,001 % en volume, de préférence inférieure à 0,0001 % en volume, de préférence inférieure à 0,00001 % en volume, de préférence inférieure à 0,000001 % en volume.

4. Procédé selon l'une quelconque des revendications précédentes, **caractérisé en ce que** le dosage volumétrique dudit au moins un premier composant et/ou le dosage gravimétrique dudit au moins un deuxième composant est/sont effectué(s) de manière automatique.

5. Procédé selon l'une quelconque des revendications précédentes, **caractérisé en ce que** ledit au moins un premier composant est guidé dans ledit au moins un volume d'échantillon (P1, P2, P3, P4) par le biais d'une première voie d'écoulement (S1) ainsi que par le biais d'un régulateur de pression (DM1) agencé dans la première voie d'écoulement (S1) de manière telle que ledit au moins un premier composant présente une pression pouvant être prédéfinie dans ledit au moins un volume d'échantillon (P1, P2, P3, P4).

6. Procédé selon la revendication 5, **caractérisé en ce que** ledit au moins un premier composant est guidé dans ledit au moins un volume d'échantillon (P1, P2, P3, P4) par le biais d'une vanne multivoie (KH1, KH2, KH3, KH4) par le biais de laquelle la première voie d'écoulement (S1) peut être amenée en liaison fluidique avec ledit au moins un volume d'échantillon (P1, P2, P3, P4).

7. Procédé selon l'une quelconque des revendications précédentes, **caractérisé en ce que** ledit au moins un volume d'échantillon est choisi parmi une multitude de volumes d'échantillon (P1, P2, P3, P4), l'un des volumes d'échantillon (P1) présentant en particulier le plus grand volume et les autres volumes d'échantillon (P2, P3, P4) présentant à chaque fois un volume qui correspond à une fraction constante du volume d'échantillon immédiatement supérieur respectif.

8. Procédé selon l'une quelconque des revendications précédentes, **caractérisé en ce que** ledit au moins un premier composant est comprimé dans le récipient à gaz (B) au moyen d'une partie dudit au moins un deuxième composant à introduire dans le récipient à gaz (B) qui est guidée par le biais de la première voie d'écoulement (S1).

9. Dispositif (1) pour produire un mélange de gaz dans un récipient à gaz (B), présentant :
- une multitude de réservoirs (V1, V2, V3, VG1, VG2) pour stocker des composants du mélange de gaz à produire,
- un récipient à gaz (B) pour recevoir le mélange de gaz à produire,
- une balance (W) pour le dosage gravimétrique de composants du mélange de gaz, laquelle balance est conçue pour peser le récipient à gaz (B),
- une première voie d'écoulement (S1) par le biais de laquelle les réservoirs (V1, V2, V3, VG1, VG2) peuvent être amenés en liaison fluidique avec le récipient à gaz (B) pour le dosage gravimétrique de composants du mélange de gaz à produire,
- une multitude de volumes d'échantillon (P1, P2, P3, P4) pour le dosage volumétrique de composants du mélange de gaz à produire, qui peuvent à chaque fois être amenés en liaison fluidique avec le récipient à gaz (B) et
- une deuxième voie d'écoulement (S2), par le biais de laquelle les réservoirs (V1, V2, V3, VG1, VG2) peuvent être amenés en liaison fluidique avec la multitude de volumes d'échantillon (P1, P2, P3, P4), **caractérisé en ce qu'**un deuxième régulateur de pression (DM2) est agencé dans la deuxième voie d'écoulement (S2), le deuxième régulateur de pression (DM2) étant conçu pour être commandé au moyen d'un signal de sortie de la balance (W).

10. Dispositif selon la revendication 9, **caractérisé en ce qu'**un premier régulateur de pression (DM1) est disposé dans la première voie d'écoulement (S1) de manière telle qu'un composant à doser par volumétrie peut être enfermé dans le volume d'échantillon respectif (P1, P2, P3, P4) à une pression pouvant être prédéfinie.

11. Dispositif selon la revendication 9 ou 10, **caractérisé en ce que** les volumes d'échantillon (P1, P2, P3, P4) sont à chaque fois disposés parallèlement à la première voie d'écoulement, chaque volume d'échantillon (P1, P2, P3, P4) pouvant être amené en liaison fluidique avec la première voie d'écoulement (S1) par le biais d'une vanne multivoie (KH1, KH2, KH3, KH4), chaque vanne multivoie (KH1, KH2, KH3, KH4) présentant un premier état, dans lequel le volume d'échantillon respectif (P1, P2, P3, P4) est en liaison fluidique avec la première voie d'écoulement (S1), ainsi qu'un deuxième état, dans lequel le volume d'échantillon respectif (P1, P2, P3, P4) est fermé et séparé de la première voie d'écoulement (S1).

12. Dispositif selon l'une quelconque des revendications 9 à 11, **caractérisé en ce que** les volumes d'échantillon (P1, P2, P3, P4) se distinguent par leur volume, l'un des volumes d'échantillon (P1) présentant en particulier le plus grand volume et les autres volumes d'échantillon (P2, P3, P4) présentant à chaque fois un volume qui correspond à une fraction constante du volume d'échantillon immédiatement supérieur respectif.
